# EUROPÄISCHE PATENTSCHRIFT

(11) **EP 2 918 876 B1**
(45) Veröffentlichungstag und Bekanntmachung des Hinweises auf die Patenterteilung: **28.02.2018**
(21) Anmeldenummer: 15000616.1
(22) Anmeldetag: 04.03.2015
(51) Int. Cl.: F16H 61/4165, E01C 19/48, F16H 61/4139

(54) **Verfahren zum Betrieb eines Hydrauliksystems eines selbstfahrenden Straßenfertigers, Hydrauliksystem, insbesondere zur Durchführung des Verfahrens, sowie Straßenfertiger mit einem solchen Hydrauliksystem**
Method for operating a hydraulic system of a self-propelled road finisher, hydraulic system, especially for carrying out this method, and road finisher with such a hydraulic system
Procédé de fonctionnement d'un système hydraulique d'une finisseuse de route automotrice, système hydraulique, en particulier destiné à exécuter le procédé et finisseuse de route dotée d'un tel système hydraulique

(30) Priorität: 05.03.2014 DE 102014003333
(43) Veröffentlichungstag der Anmeldung: 16.09.2015
(73) Patentinhaber: BOMAG GmbH, 56154 Boppard (DE)
(72) Erfinder: Nick, Moritz, 56154 Boppard (DE); Christ, Hermann, 56288 Bubach (DE)
(74) Vertreter: Heidler, Philipp

(56) Entgegenhaltungen:
- EP-A1- 0 691 234
- DE-A1- 2 112 327
- DE-A1-102009 021 866
- DE-A1-102011 018 469

## Beschreibung

Die Erfindung betrifft ein Verfahren zur Einspeisung von Hydrauliköl in einen geschlossenen hydraulischen Kreislauf eines selbstfahrenden Straßenfertiger. Die Erfindung betrifft ferner ein Hydrauliksystem (Hydraulikschaltkreis), insbesondere zur Durchführung dieses Verfahrens, sowie einen Straßenfertiger mit einem solchen Hydrauliksystem. Das Hydrauliksystem des Straßenfertigers umfasst wenigstens einen geschlossenen hydraulischen Kreislauf (Hydraulikkreislauf) mit wenigstens einer Arbeitspumpe und mindestens einem Hydraulikmotor.

Für den Fahrantrieb und weitere Antriebe werden in vielen selbstfahrenden Straßenfertigern Hyd,raulikmotoren in, insbesondere jeweils, einem geschlossenen hydraulischen Kreislauf eingesetzt. Die Hydraulikmotoren werden von hydrostatischen Pumpen (nachstehend zur besseren Unterscheidbarkeit als Arbeitspumpen bezeichnet) mit Hydrauliköl beaufschlagt, die wiederum von zum Beispiel einem Verbrennungsmotor angetrieben werden. Mit Arbeitspumpe ist vorliegend somit eine Hydraulikpumpe bezeichnet, die das Hydrauliköl innerhalb eines geschlossenen Hydraulikkreislaufes zum Antrieb eines Verbrauchers fördert. Zum Austausch von Hydrauliköl (beispielsweise zu Kühl- oder Reinigungszwecken) im geschlossenen Kreislauf wird dabei üblicherweise aus dem Kreislauf pro Zeiteinheit eine bestimmte Menge des Hydrauliköls entnommen, welche an anderer Stelle durch ein gekühltes und gefiltertes Hydrauliköl ersetzt wird, damit die Gesamtmenge Hydrauliköl im geschlossenen Hydraulikkreislauf idealerweise annähernd konstant ist. Dieser Vorgang wird vorliegend als Ausspülung bezeichnet. Die Einspeisung des Hydrauliköls in den geschlossenen Hydraulikkreislauf während des Ausspülprozesses erfolgt üblicherweise mit Hilfe von Konstantpumpen mit einem konstanten Fördervolumen. Dabei ist die Pumpleistung so ausgelegt, dass bei einem Betrieb des Kreislaufs unter Belastung der Hydromotoren und gleichzeitig geringem Hydrauliköldurchfluss, d.h. bei geringer Drehzahl des Verbrennungsmotors, eine zum Ausgleich des pro Zeiteinheit aus dem geschlossenen Hydraulikkreislauf entnommenen Hydraulikölvolumens ausreichende Öleinspeisung sichergestellt ist. Um eine über das gesamte Betriebsspektrum ausreichende Öleinspeisung zu gewährleisten, ist die Förderleistung der Konstantpumpe daher stets auf eine Überversorgung des Kreislaufs mit Hydrauliköl ausgelegt, wobei Überschüsse als Verlustleistung verloren gehen. Dies bewirkt einen unnötigen Treibstoffverbrauch. Darüber hinaus treten häufig beim Starten, insbesondere beim Kaltstarten des Verbrennungsmotors, Probleme auf, da die verursachten Schlepplasten sehr hoch sind. Ein gattungsgemäßer Straßenfertiger ist beispielsweise aus der DE 10 2011 018 469 A1 bekannt. Zum Betrieb von mobilen Arbeitsmaschinen geeignete Hydraulikantriebe sind hingegen in der DE 21 12 327 A1 und der DE 10 2009 021 866 A1 angegeben, während die EP 0 691 234 A1 ein Spülverfahren für ein auf mobilen Arbeitsmaschinen eingesetztes Hydrauliksystem beschreibt.

Der Erfindung liegt die Aufgabe zu Grunde, ein Verfahren, ein Hydrauliksystem und einen Straßenfertiger der eingangs genannten Art anzugeben, mit welchen der Treibstoffverbrauch des Verbrennungsmotors verringert und gleichzeitig die erforderliche Schleppleistung beim Starten, insbesondere beim Kaltstarten, verkleinert werden kann.

Die Lösung der Aufgabe gelingt mit einem Verfahren, einem Hydrauliksystem und einem Straßenfertiger gemäß den unabhängigen Ansprüchen. Bevorzugte Weiterbildungen sind in den abhängigen Ansprüchen angegeben.

Diese Aufgabe wird verfahrensmäßig zum Betrieb eines Hydrauliksystem eines selbstfahrenden Straßenfertigers dadurch gelöst, dass die in den geschlossenen Hydraulikkreislauf eingespeiste Menge an Hydrauliköl pro Zeiteinheit geregelt und von der Menge her bedarfsgerecht, insbesondere in Abhängigkeit von mindestens einem Betriebsparameter des Straßenfertigers, erfolgt. Ein wesentlicher Aspekt der Erfindung besteht somit darin, dass nicht mehr, wie bisher, eine stets übermäßige Einspeisemenge an Hydrauliköl bereitgestellt wird, sondern die Einspeisung vielmehr bedarfsgerecht und auf die jeweilige Betriebssituation abgestimmt erfolgt. Die für den Einspeisevorgang verantwortliche Pumpe, die direkt oder indirekt eine der entnommenen Menge Hydrauliköl im Wesentlichen entsprechende Menge Hydrauliköl in den geschlossenen Hydraulikkreislauf einspeist, wird vorliegend als Speisepumpe bezeichnet. Ideal ist es dabei, wenn auch die aus dem geschlossenen Hydraulikkreislauf entnommene und rückgeführte beziehungsweise eingespeiste Menge von Hydrauliköl in Abhängigkeit von mindestens einem Betriebsparameter des Straßenfertigers geregelt und verändert wird. Für die Regelung der Entnahmemenge und/oder der Einspeisemenge kann dabei für jeden Betriebszustand jeweils auf mindestens einen geeigneten individuellen Betriebsparameter zurückgegriffen werden. Mit diesem Gesamtpaket ist es möglich, über den Betriebsvorgang hinweg das pro Zeiteinheit ausgespülte Hydraulikölvolumen somit in Abhängigkeit von wenigstens einem Betriebsparameter an die jeweils aktuell vorliegenden Betriebsumstände anzupassen und abzustimmen. Auf diese Weise werden Verlustleistungen durch übermäßige Ausspülprozesse drastisch reduziert und die Effizienz des Betriebs des Hydraulikkreislaufes, insbesondere hinsichtlich Treibstoffverbrauch, wird gesteigert. Wird der wenigstens eine von der Arbeitspumpe im geschlossenen Hydraulikkreislauf angetriebene Verbraucher, typischerweise Hydraulikmotor, während des Betriebs des Straßenfertigers gerade nicht benötigt, erfolgt auch keine oder zumindest nur eine sehr geringe Entnahme/Einspeisung, da in diesem Fall keine Ausspülung einer Teilmenge des im geschlossenen Hydraulikkreislauf befindlichen Hydrauliköls notwendig ist. Bevorzugt ist wenn, wenn eine geringe Ausspülung (Mindestausspülung) stets erfolgt. Diese ist aber erheblich geringer als die während des Betriebs erfolgende Ausspülung. Wird der vom geschlossenen Hydraulikkreislauf angetriebene Verbraucher jedoch beansprucht, wird, abhängig von der Beanspruchung, der Ausspülvorgang und damit die Menge des pro Zeiteinheit aus dem geschlossenen Hydraulikkreislauf entnommenen und eingespeisten Hydrauliköls hochgeregelt und an die individuellen Betriebsbedingungen angepasst. Dadurch wird insgesamt der gesamte Ausspül- und Einspeiseprozess erheblich effizienter gestaltet. Ferner wird das Startverhalten des Straßenfertigers, insbesondere beim Kaltstart, erheblich verbessert. Ein wesentlicher Aspekt der Erfindung liegt somit darin, dass verfahrensgemäß zur Öleinspeisung in den geschlossenen Hydraulikkreislauf eine als Verstellpumpe, insbesondere mit variabler Förderleistung, ausgebildete Speisepumpe zurückgegriffen wird, wobei die aktuelle Förderleistung der Speisepumpe anhand eines Betriebsparameters, beispielsweise eines festgelegten Speisedrucks, bedarfsgerecht geregelt (druckgeregelt) wird, konkret beispielsweise mit Hilfe eines Druckreglers. Die Förderleistung der Speisepumpe wird dabei beispielsweise in der Weise variiert, dass auch bei unterschiedlichen Betriebssituationen der Druck innerhalb einer Einspeiseleitung zum geschlossenen Hydraulikkreislauf und/oder am Ausgang der Speisepumpe auf einem festgelegten Solldruckwert gehalten wird. Sinkt somit beispielsweise der Druck an der Referenzstelle ab, wird die Förderleistung der Speisepumpe erhöht und umgekehrt. Damit fördert die Speisepumpe im Ausspülprozess nur soviel Hydrauliköl zur Einspeisung, wie es in der konkreten Betriebssituation gerade erforderlich ist. Damit kann dieser Vorgang erheblich effizienter gestaltet werden.

Um gleichzeitig zur bedarfsgerechten Regelung des Ausspülprozesses mit Hilfe der regelbaren Speisepumpe eine unabhängige und zuverlässige Kühlung und/oder Schmierung der wenigstens einen Arbeitspumpe und/oder des wenigstens einen Hydraulikmotors des geschlossenen Hydraulikkreislaufes zu ermöglichen, ist es erfindungsgemäß vorgesehen, dass ferner ein Spülkreislauf mit einer als Konstantpumpe ausgebildeten Spülpumpe (nachstehend auch als Kühl- und Schmierpumpe bezeichnet) vorhanden ist, über den unabhängig zum geschlossenen Hydraulikkreislauf ein kontinuierliches und von dem wenigstens einen Betriebsparameter unabhängiges Spülen und/oder Kühlen der wenigstens einen Arbeitspumpe und/oder des wenigstens einen Hydraulikmotors zu Kühl- und/oder Schmierzwecken erfolgt. Die Konstantpumpe zeichnet sich im Gegensatz zur Verstellpumpe dadurch aus, dass sie pro Zeiteinheit ein konstantes Ölvolumen fördert. Die Konstantpumpe fördert somit insbesondere unabhängig vom aktuellen Betriebszustand der Arbeitspumpe im geschlossenen Hydraulikkreislauf Hydrauliköl. Damit wird zugleich, unabhängig von der Entnahme und Einspeisung von Hydrauliköl aus bzw. in den geschlossenen Hydraulikkreislauf, über ein eigenständiges Kühl- und Schmiersystem die Arbeitspumpe des geschlossenen Hydraulikkreislaufs gekühlt und geschmiert, indem mittels der als Konstantpumpe ausgebildeten Spülpumpe Hydrauliköl durch die Arbeitspumpe, beispielsweise durch ihr Gehäuseinneres, gepumpt wird. Das dazu verwendete Hydrauliköl wird während dieses Vorgangs nicht dem geschlossenen Hydraulikkreislauf zugeführt und ist somit vom vorstehend genannten Ausspülprozess zu unterscheiden. Es wird vielmehr über beispielsweise zusätzliche Anschlüsse am Gehäuse der Arbeitspumpe und/oder am Hydraulikmotor dieser/m zu- und abgeführt. Dieser Vorgang wird vorliegend als Querspülung der Arbeitspumpe/des Hydraulikmotors des geschlossenen Hydraulikkreislaufes bezeichnet. Durch die Verwendung einer Konstantpumpe als Spülpumpe ist sichergestellt, dass stets eine ausreichende Kühlung und Schmierung der Arbeitspumpe und/oder des Hydraulikmotors des wenigstens einen geschlossenen Hydraulikkreislaufes auch dann erfolgt, wenn keine Einspeisung von Hydrauliköl in den geschlossenen Hydraulikkreislauf abläuft. Gleichzeitig kann die Spülpumpe als vergleichsweise leistungsschwaches und kleines Aggregat ausgebildet werden, da sie ausschließlich für den Prozess der Querspülung erforderlich ist. Auch dies ermöglicht in der Gesamtbilanz eine besonders effiziente Durchführung des erfindungsgemäßen Verfahrens.

Vorzugsweise wird der mindestens eine Betriebsparameter zur Regelung der Speisepumpe aktuell ermittelt und daraus anhand eines vorgegebenen Algorithmus eine Stellgröße zur Entnahme und/oder Einspeisung des Hydrauliköls berechnet. Alternativ kann die Stellgröße, beispielsweise ein Signal an einem Proportionalventil, aus dem Vergleich des aktuell ermittelten Betriebsparameters mit vorgegebenen Kenngrößen ermittelt werden. Wesentlich ist, dass das Ausmaß einer Hydraulikölentnahme und/oder -einspeisung aus einem geschlossenen Hydraulikkreislauf an wenigstens einen Betriebsparameter gekoppelt ist. Ein solcher Betriebsparameter kann beispielsweise in nachstehend noch näher beschriebener Weise die Temperatur des Hydraulikfluids und/oder Druckverhältnisse im Hydraulikkreislauf etc sein. Durch diese bedarfsgerechte Regelung der Entnahme und Einspeisung von Hydraulikfluid zu Ausspülzwecken aus dem geschlossenen Hydraulikkreislauf kann das Ausmaß, konkret das ausgespülte Volumen Hydraulikfluid pro Zeiteinheit, an die jeweiligen Betriebsbedingungen angepasst und optimiert werden. Konkret kann es zur Durchführung des Verfahrens beispielsweise vorgesehen sein, dass die Regelung der Förderleistung der Speisepumpe lastdruckabhängig, beispielsweise anhand des Drucks des Hydrauliköls in einer Lastmeldeleitung, erfolgt und der Druck des Hydrauliköls dazu in diesem Bereich, insbesondere pumpenintern (d.h. innerhalb einer baulich zusammenhängenden Pumpenbaueinheit), überwacht wird. Ein Absinken des Druckes in der Rückführleitung führt dabei zu einer erhöhten Förderleistung der Speisepumpe und umgekehrt.

Bevorzugt ist es für das erfindungsgemäße Verfahren vorgesehen, dass die aus dem geschlossenen Hydraulikkreislauf entnommene Menge Hydrauliköl und das in dem Spülkreislauf stromabwärts der wenigstens einen Arbeitspumpe und/oder dem wenigstens einen Hydraulikmotor austretende Hydrauliköl in einem gemeinsamen Sammler vereint und einem gemeinsamen Tank, insbesondere über einen gemeinsamen Kühler, zugeführt wird. Die Kreisläufe für die Ausspülung und die Querspülung werden somit stromabwärts des geschlossenen Hydraulikkreislaufes und stromabwärts der wenigstens einen Arbeitspumpe und/oder des wenigstens einen Hydraulikmotors vereint und anschließend vorzugsweise gemeinsam einem Kühler, falls erforderlich, zugeführt. Auf diese Weise lässt sich der Gesamtaufbau des für die Durchführung des erfindungsgemäßen Verfahrens vorgesehenen Hydrauliksystems vereinfachen.

In einer weiter bevorzugten Weiterbildung des erfindungsgemäßen Verfahrens ist es bevorzugt, wenn stromabwärts der Konstantpumpe im Spülkreislauf ein Aufteilen des von der Konstantpumpe geförderten Hydrauliköls auf Arbeitspumpen und/oder Hydraulikmotoren wenigstens zweier geschlossener Hydraulikkreisläufe erfolgt, wobei hiervon unabhängig in beide geschlossenen Hydraulikkreisläufe bedarfsgerecht geregelt Hydrauliköl rückgeführt wird. Diese Weiterbildung hat den Vorteil, dass das für das gesamte Hydrauliksystem des Straßenfertigers, das typischerweise mehrere geschlossene Hydraulikkreisläufe umfasst, für die Querspülung erforderliche Hydrauliköl zentral von der einen Spülpumpe gefördert wird. Auf diese Weise kann der Gesamtaufbau des Hydrauliksystems bei gleichzeitig effizienter Betriebsweise vereinfacht werden. Der Verteiler zeichnet sich dabei dadurch aus, dass er einen einzigen Zufluss für das von der Spülpumpe geförderte Hydrauliköl und wenigstens zwei Abflüsse aufweist. Ein solcher zentraler Verteiler ist ferner aus wartungstechnischen Gründen vorteilhaft.

Vorrichtungsmäßig geht die Erfindung von einem gattungsgemäßen Hydrauliksystem (auch als Hydraulikschaltkreis bezeichnet) eines Straßenfertigers aus, umfassend wenigstens einen geschlossenen Hydraulikkreislauf mit mindestens einer Arbeitspumpe und wenigstens einem von dieser angetriebenen Verbraucher, insbesondere Hydraulikmotor, wobei dem geschlossenen Hydraulikkreislauf im Betrieb pro Zeiteinheit eine Menge Hydrauliköl zu Kühl- und/oder Filterzwecken entnommen und an anderer Stelle eine Menge Hydrauliköl pro Zeiteinheit wieder zugeführt wird, und wobei die Zufuhr über eine aus einem Tank mit Hydrauliköl gespeiste Speisepumpe erfolgt. Erfindungsgemäß ist das Hydrauliksystem des Straßenfertigers bevorzugt zur Durchführung des erfindungsgemäßen Verfahrens ausgebildet. Wesentlich für die Lösung der Aufgabe ist es nun, dass das Hydrauliksystem (auch als Hydraulikschaltkreis bezeichnet) derart eingerichtet ist, dass das Ausmaß des Ausspülprozesses, also die Menge pro Zeiteinheit aus dem wenigstens einen geschlossenen Hydraulikkreislauf entnommenen und rückgeführten beziehungsweise ausgetauschten Hydrauliköls, an die jeweilige Betriebssituation angepasst variabel ist. Dazu ist es vorgesehen, dass die Speisepumpe eine Verstellpumpe mit variabler Förderleistung ist, deren Förderleistung anhand von mindestens einem Betriebsparameter bedarfsgerecht geregelt ist, derart, dass sie Hydrauliköl bedarfsdeckend in den hydraulischen Kreislauf einspeist. Damit ist sichergestellt, dass für den Ausspülprozess immer nur soviel Hydrauliköl gefördert wird, wie es für die jeweilige Betriebssituation gerade erforderlich ist. Gleichzeitig ist es erfindungsgemäß vorgesehen, dass das Hydrauliksystem eine als Konstantpumpe ausgebildete Spülpumpe aufweist, die unabhängig von der Speisepumpe, insbesondere konstant, Hydrauliköl in einen Spülkreislauf fördert, wobei der Spülkreislauf derart ausgebildet ist, dass durch ihn die wenigstens eine Arbeitspumpe und/oder der wenigstens eine Hydraulikmotor unabhängig vom Betrieb der Speisepumpe mit Hydrauliköl gespült und/oder gekühlt wird. Der Spülkreislauf ist unabhängig vom geschlossenen Hydraulikkreislauf. Dazu wird das Hydrauliköl des Spülkreislaufes beispielsweise durch das Gehäuse der wenigstens einen Arbeitspumpe und/oder wenigstens eines Verbrauchers geleitet, nicht aber in oder durch die Leitungen des geschlossenen Hydraulikkreislaufes. Der Spülkreislauf verläuft fluidisch gesehen somit unabhängig bzw. "quer" zum geschlossenen Hydraulikkreislauf und erfüllt keine Antriebsfunktion für einen Verbraucher, wie beispielsweise einem Hydraulikmotor. Durch diesen Aufbau ist gewährleistet, dass die wenigstens eine Arbeitspumpe und/oder der wenigstens eine Hydraulikmotor unabhängig vom Betriebszustand des Hydrauliksystems und insbesondere unabhängig vom Betriebszustand der Speisepumpe eine im Wesentlichen kontinuierliche Kühlung und/oder Schmierung erfahren. Wichtig ist dabei, dass die Spülpumpe von der Regelung der Speisepumpe nicht betroffen ist und unabhängig von dieser Regelung betrieben wird. Gleichzeitig kann die Spülpumpe vergleichsweise klein, leistungsschwach und kompakt ausgebildet werden, da sie allein für diese eine Aufgabe vorgesehen ist. Dadurch kann der für den Spülvorgang erforderliche Energiebedarf vergleichsweise gering gehalten werden.

Vorzugsweise umfasst der geschlossene Hydraulikkreislauf eine Spül- bzw. Auslassblende und ein, insbesondere in Strömungsrichtung stromabwärts zur Spülblende gelegenes, Druckhalteventil. Die Spülblende bezeichnet eine Blende in einer Leitungsabzweigung im geschlossenen Hydraulikkreislauf, über die Hydrauliköl aus diesem entnommen werden kann. Das Druckhalteventil stellt sicher, dass der Niederdruck im geschlossenen Hydraulikkreislauf auf einem gewünschten Niveau gehalten wird. Bevorzugt ist dem Druckhalteventil ein Proportionalventil nachgeschaltet, welches in Abhängigkeit von dem Betriebsparameter angesteuert ist, so dass der Ventilöffnungsquerschnitt und damit die aus dem Kreislauf entnommene und in den Hydrauliköltank zurückgeführte Menge an Hydrauliköl vom Betriebsparameter abhängt und variiert werden kann. Das Proportionalventil kann auch als Stetigventil bezeichnet werden. Über diese Anordnung kann das Entnahmevolumen des Hydrauliköls aus dem geschlossenen Hydraulikkreislauf pro Zeiteinheit geregelt werden.

Erfindungsgemäß wird insbesondere die Einspeisung von Hydrauliköl in den Hydraulikkreislauf bedarfsgerecht geregelt. Hierzu ist als Speisepumpe konkret eine Verstellpumpe vorgesehen, deren zentrales Kernmerkmal darin liegt, dass sie eine variable Förderleistung, d.h. ein veränderbares Fördervolumen pro Zeiteinheit, aufweist. Eine solche Verstellpumpe kann beispielsweise eine Axialkolbenpumpe sein. Die Förderleistung kann dabei beispielsweise durch eine Änderung der Umdrehungen des Pumpenantriebs pro Minute und/oder durch Veränderung des Schluckvolumens der Speisepumpe geändert werden. Die Regelung der Förderleistung der Speisepumpe erfolgt dabei bevorzugt zumindest indirekt anhand der Entnahmemenge von Hydraulikfluid aus dem geschlossenen Hydraulikkreislauf, beispielsweise zu Kühl- und Filterzwecken, und wird dabei somit auch anhand eines Betriebsparameters geregelt, bei dem es sich allerdings insbesondere um einen anderen Betriebsparameter als zur Steuerung des Proportionalventils handelt. Ein für die Regelung der Förderleistung der Speisepumpe besonders geeigneter Betriebsparameter kann beispielsweise ein Solldruckwert am Ausgang der Speisepumpe oder ein innerhalb einer Einspeiseleitung ermittelter Druckwert sein. Ein für die Steuerung des Proportionalventils möglicher Betriebsparameter kann beispielsweise die Temperatur des Hydrauliköls im geschlossenen Hydraulikkreislauf sein. Insgesamt ermöglicht dieser Grundaufbau die im Betrieb des geschlossenen Hydraulikkreislaufes erfolgende Ausspülung von Hydrauliköl sowohl in Bezug auf die Entnahmemenge von Hydrauliköl pro Zeiteinheit aus dem geschlossenen Hydraulikkreislauf als auch in Bezug auf die Einspeisemenge von Hydrauliköl pro Zeiteinheit in den geschlossenen Hydraulikkreislauf bedarfsgerecht zu regeln, so dass auf diese Weise Leistungsverluste minimiert werden können. Ergänzend hierzu stellt die Spülpumpe und der von ihr versorgte Spülkreislauf sicher, dass auch bei geringer Einspeisung durch die Speisepumpe eine ausreichende Kühlung und Schmierung der beweglichen Teile der Pumpe im geschlossenen Hydraulikkreislauf gewährleistet ist. Diese als Konstantpumpe ausgebildete Kühl- und Schmierpumpe pumpt über eine separate Kühl- und Schmierleitung einen stetigen, vorzugsweise konstanten, Volumenstrom an Hydrauliköl über separate Anschlüsse durch beispielsweise das Gehäuseinnere der Arbeitspumpe, insbesondere quer zum Fluidstrom des geschlossenen Hydraulikreislaufes. Diese Kühl- und Schmierleitung steht nicht direkt in Verbindung mit dem geschlossenen Hydraulikkreislauf, die Arbeitspumpe wird auf diese Weise mit anderen Worten unter Umgehung des Drucks bzw. Hydrauliköls im geschlossenen Hydraulikkreislauf quergespült, so dass Kühlung und Schmierung der Arbeitspumpe im Vergleich zu einer Einspeisung einer entsprechenden Mindestmenge durch die Speisepumpe mit wesentlich geringerem Energieaufwand realisiert werden können.

Die Erfindung hat den Vorteil, dass insbesondere die Einspeisung in den geschlossenen Hydraulikkreislauf bedarfsgerecht erfolgt, so dass der Wirkungsgrad des Straßenfertiger optimiert wird. Eine überschüssige Hydraulikölmenge, wie sie beim Stand der Technik stets vorhanden ist und welche in Verlustleistung umgesetzt wird, wird vermieden. Während herkömmliche Konstantstrompumpen, wenn Sie zur Einspeisung von Hydrauliköl in einen geschlossenen Hydraulikkreislauf herangezogen werden, stets mehr Öl einspeisten, als tatsächlich beispielsweise zur Einspeisung notwendig ist, liefert die erfindungsgemäße bedarfsgerecht geregelte Speisepumpe nur die Ölmenge, für welche tatsächlich Bedarf besteht und auch abgerufen wird. Zudem kann dadurch, dass die Arbeitspumpe unabhängig von der Einspeisung mit Hilfe einer separaten Kühl- und Schmierpumpe gekühlt und geschmiert wird, auch eine Mindesteinspeisemenge der Speisepumpe vermieden werden, die anderenfalls für die Grundversorgung der Arbeitspumpe mit gekühltem Hydrauliköl zu Kühl- und Schmierzwecken notwendig wäre. Im Zusammenspiel mit einer wenigstens von einem Betriebsparameter abhängig gesteuerten Entnahme von Hydraulikfluid aus dem geschlossen Hydraulikkreislauf kann somit insgesamt ein hochgradig optimiertes Gesamtsystem zur Steuerung des Ausspülprozesses von Hydraulikfluid aus einem geschlossenen Hydraulikkreislauf, insbesondere zu Kühl- und Filterzwecken, erreicht werden.

Es ist besonders vorteilhaft, dass der mindestens eine Betriebsparameter aktuell ermittelt und daraus beispielsweise eine Stellgröße zur Regelung der Entnahme des Hydrauliköls und/oder eine Stellgröße zur Regelung des Fördervolumens der Speisepumpe anhand eines vorgegebenen Algorithmus berechnet wird. Alternativ kann es zweckmäßig sein, dass die Stellgröße aus dem Vergleich des aktuell ermittelten Betriebsparameters mit vorgegebenen Kenngrößen abgeleitet wird. Insgesamt ergibt sich dabei somit beispielsweise ein Regelsystem, bei dem die aus dem geschlossenen Hydraulikkreislauf pro Zeiteinheit entnommene Menge Hydrauliköl die pro Zeiteinheit einzuspeisende Menge Hydrauliköl regelt.

Eine Absicherung des wenigstens einen geschlossenen Hydraulikkreislaufs kann vorzugsweise dadurch erreicht werden, dass der Druck des wieder eingespeisten Hydrauliköls überwacht wird.

Das Proportionalventil kann besonders einfach dadurch angesteuert werden, dass es einen Steuereingang auf der Basis eines elektrisch betätigbaren Magneten, eines Wachsdehnelements oder eines Bimetalls aufweist.

Da insbesondere die Temperatur des Hydrauliköls, insbesondere im wenigstens einen geschlossenen Hydraulikkreislauf, kritisch sind, ist es vorteilhaft, wenn der mindestens eine Betriebsparameter über einen Temperatursensor ermittelt wird, und das Proportionalventil von einer elektronischen Steuereinheit (ECU) angesteuert ist. Der relevante Betriebsparameter ist dann entsprechend die Temperatur des Hydrauliköls. Diese kann innerhalb des geschlossenen Hydraulikkreislaufes oder beispielsweise insbesondere auch in Strömungsrichtung des Hydrauliköls hinter dem Auslass des entnommenen Hydraulikfluids aus dem jeweiligen Aggregat, insbesondere einem Motor, ermittelt werden. Die Steuerung der Förderleistung der Speisepumpe erfolgt dagegen insbesondere in Abhängigkeit eines Druckreferenzwertes, beispielsweise in einer Zuführleitung zum geschlossenen Hydraulikkreislauf.

Besonders viele Betriebsbedingungen des Straßenfertigers können dadurch überwacht werden, dass mehrere Betriebsparameter von einem Motorsteuergerät oder einer Maschinesteuerung zur Auswertung in der elektronischen Steuereinheit (ECU) abgeleitet werden, und dass das Proportionalventil von der elektronischen Steuereinheit (ECU) angesteuert ist.

Es ist zweckmäßig, dass ein Datenspeicher vorhanden ist, in welchem Kenngrößen des mindestens einen Betriebsparameters zum Vergleich mit dem aktuellen Betriebsparameter gespeichert sind, und dass sie zur Ermittlung einer Stellgröße für die Entnahme des Hydrauliköls der elektronischen Steuereinheit (ECU) zugeführt werden.

Eine bevorzugte Weiterbildung der Erfindung besteht darin, dass mehrere geschlossene hydraulische Kreisläufe vorhanden sind, und dass jeder Kreislauf separat geregelt ist. Wenn auf diese Weise mehrere Kreisläufe individuell geregelt werden, kann ein besonders guter Wirkungsgrad des Straßenfertigers erzielt werden. Die wenigstens zwei geschlossenen Hydraulikkreisläufe des Straßenfertigers werden dabei unabhängig voneinander betrieben, beispielsweise um unterschiedliche Maschinenfunktionen zu erfüllen. Die wenigstens zwei Hydraulikkreisläufe sind somit in Bezug auf den Ausspülprozess beispielsweise parallel nicht aber in Serie angeordnet. In diesem Zusammenhang ist es nun bevorzugt, wenn die bedarfsdeckende Einspeisung von Hydrauliköl in die mehreren geschlossenen Hydraulikkreisläufe gemeinsam über die als Verstellpumpe ausgebildete Speisepumpe erfolgt, wobei stromabwärts der Speisepumpe ein Verteiler vorgesehen ist, über den die Zuleitung des Hydrauliköls zu den mehreren geschlossenen Hydraulikkreisläufen erfolgt. Wesentlich für diese Weiterbildung der Erfindung ist somit, dass nicht jedem der wenigstens zwei geschlossenen Hydraulikkreisläufe eine eigene Speisepumpe zugeordnet ist. Die eine Speisepumpe stellt vielmehr für die wenigstens zwei geschlossenen Hydraulikkreisläufe gemeinsam das für den Einspeisevorgang benötigte Hydrauliköl zur Verfügung, jeweils bedarfsgerecht. Dazu erfolgt die Aufteilung des von der Speisepumpe geförderten Hydrauliköls stromabwärts der Pumpe in dem Verteiler, dessen Aufgabe darin besteht, den Strom des von der Speisepumpe kommenden Hydrauliköls auf die wenigstens zwei geschlossenen Hydraulikkreisläufe aufzuteilen, entsprechend dem jeweiligen Bedarf. Ein solcher Verteiler kann beispielsweise ein Verteilblock mit einem Eingang für das von der Speisepumpe kommende Hydrauliköl und mehreren Ausgängen zum Anschluss an die wenigstens zwei geschlossenen Hydraulikkreisläufe sein. In einer besonders bevorzugten Ausführungsform ist es vorgesehen, dass je ein geschlossener Hydraulikkreislauf für den Fahrantrieb rechts und/oder für den Fahrantrieb links und/oder für ein Kratzband rechts und/oder für ein Kratzband links und/oder für eine Förderschnecke rechts und/oder für eine Förderschnecke links und/oder für einen Stampferantrieb und/oder für den Antrieb einer Vibrationsvorrichtung vorgesehen ist.

Um den Gesamtaufbau des erfindungsgemäßen Hydrauliksystems des Straßenfertigers zu vereinfachen, ist es bevorzugt, wenn der Einspeise- und Ausspülkreislauf und der Querspülkreislauf außerhalb des geschlossenen Hydraulikkreislaufes nicht vollständig voneinander getrennt sind. Konkret ist es bevorzugt, wenn ein Sammler vorhanden ist, über den die aus dem wenigstens einen geschlossenen Hydraulikkreislauf entnommene Menge Hydrauliköl und die mittels der Spülpumpe durch die wenigstens eine Arbeitspumpe und/oder den wenigstens eine Hydraulikmotor geförderte Menge Hydrauliköl vereint werden und vorzugsweise einem gemeinsamen Tank zugeführt werden, aus dem die Speisepumpe und die Spülpumpe jeweils Hydrauliköl entnehmen. Der Sammler ist ein Bauteil mit mehreren Eingängen, über die ihm Hydrauliköl vom Spülvorgang und von der Entnahme aus dem geschlossenen Hydraulikkreislauf zugeführt werden, und einem einzigen, gemeinsamen Ausgang, über den die vereinten Mengen Hydrauliköl insbesondere einem entsprechenden Tank zugeführt werden. Der Vorteil dieser Ausführungsform liegt darin, dass die Anzahl der für das Hydrauliköl erforderlichen Leitungen insgesamt reduziert werden kann.

Grundsätzlich ist es möglich, dass der Sammler das Hydrauliköl direkt in einen Tank oder zunächst vollständig durch einen Kühler und anschließend in einen Tank weiterleitet. Bevorzugt ist es jedoch, wenn eine stromabwärts des Sammler angeordnete Kühlbypassleitung vorhanden ist, über die das aus dem Sammler austretende Hydrauliköl in Strömungsrichtung vor dem Sammeltank und/oder vor der Speisepumpe zumindest teilweise einem Kühler zuführbar ist. Diese Anordnung hat den Vorteil, dass sie eine sehr genaue Temperatureinstellung des Hydrauliköls ermöglicht und dabei eine übermäßige Kühlung vermeidet und gleichzeitig eine erforderliche Kühlung bereit stellt. Das System kann damit schnell auf Betriebstemperatur gebracht werden.

Grundsätzlich kann zur konkreten Ausbildung der Speisepumpe auf eine Vielzahl verschiedener Varianten zurückgegriffen werden. Wesentlich ist, dass die Speisepumpe ein variables Fördervolumen pro Zeiteinheit zur Verfügung stellt und die Einstellung des konkreten Fördervolumens im Betrieb in Abhängigkeit wenigstens eines Betriebsparameters variiert und angepasst wird, insbesondere mit dem Ziel, am Pumpenausgang ein konstantes Druckniveau zu gewährleisten. Vorzugsweise erfolgt eine Variation der Förderleistung über eine Veränderung des Volumens eines Förderzylinderinnenraums. Idealerweise umfasst die Speisepumpe zur bedarfsgerechten Steuerung der Förderleistung dazu beispielsweise einen Druckregler, der zur Einstellung des Betriebsdrucks der Speisepumpe an ihrem Ausgang innerhalb eines Regelbereiches ausgebildet ist. Der Druckregler ist in der Weise ausgebildet, dass er die Förderleistung der Speisepumpe bei sinkendem Druck erhöht und umgekehrt. Maßgeblich für die Druckregulation kann dabei beispielsweise der am Pumpenausgang in der Ausgangsleitung vorherrschende Druck sein. Der Druckregler kann ferner mit der Speisepumpe ein gemeinsames Modul, insbesondere auch von einem gemeinsamen Gehäuse umgeben, bilden

In einem weiteren Aspekt betrifft die Erfindung einen Straßenfertiger mit einem vorstehend beschriebenen Hydrauliksystem (Hydraulikkreislauf). Ein solcher Straßenfertiger ist somit ebenfalls Teil der Erfindung. Solche Straßenfertiger weisen üblicherweise mehrere geschlossene Hydraulikkreisläufe nebeneinander zum Betrieb verschiedener Verbraucher, wie beispielsweise Fahrantrieben, Stampfleisten, Antriebe für Verteilerschnecken, Antriebe für Fördereinrichtungen, Antriebe für Vibrationseinrichtungen etc., auf. Dabei treten die Vorteile des erfindungsgemäßen Hydrauliksystems besonders deutlich hervor.

Für einen erfindungsgemäßen Straßenfertiger ist es daher auch bevorzugt, wenn er wenigstens zwei geschlossene Hydraulikkreisläufe mit jeweils wenigstens einer Arbeitspumpe und jeweils wenigstens einem Hydraulikmotor umfasst, wobei stromabwärts der Spülpumpe ein Verteiler vorhanden ist, der das von der Spülpumpe geförderte Hydrauliköl parallel auf die jeweils wenigstens eine Arbeitspumpe und/oder den wenigstens eine Hydraulikmotor der beiden Hydraulikkreisläufe aufteilt. Wesentlich für diese Weiterbildung der Erfindung ist nun, dass zwar mehrere geschlossene Hydraulikkreisläufe vorhanden sind, über die Verbraucher unabhängig voneinander angetrieben werden können. Gleichzeitig erfolgt die Querspülung aber von zentraler Stelle mit der einen Spülpumpe. Ergänzend oder alternativ erfolgt auch die individuelle Einspeisung in die wenigstens beiden geschlossenen Hydraulikkreisläufe über eine gemeinsame Speisepumpe. Beide Maßnahmen erleichtern die Gesamtkonstruktion des Straßenfertigers.

Sofern wenigstens zwei geschlossene Hydraulikkreisläufe mit jeweils einer Arbeitspumpe vorhanden sind, sind die wenigstens zwei Arbeitspumpen bevorzugt als Baueinheit zusammengefasst. Dies ermöglicht einen kompakten Gesamtaufbau. Gleichzeitig ist es aber bevorzugt, wenn die wenigstens zwei Arbeitspumpen separate Ein- und Ausgänge für das von der Spülpumpe zu Spül- und/oder Kühlzwecken geförderte Hydrauliköl aufweisen.

Erfindungsgemäße Straßenfertiger umfassen vorzugsweise eine Vielzahl hydraulischer Verbraucher, wie beispielsweise eine Stampfbohle, einen rechten Fahrantrieb und einen linken Fahrantrieb, rechte und linke Antriebe für Förderschnecken, rechte und linke Antriebe für Kratzbänder, Antriebe für Vibrationseinrichtungen etc. mit je einem geschlossenen Hydraulikkreislauf. Je mehr Verbraucher in hydraulischen Kreisläufen vorhanden sind, desto deutlicher treten die möglichen Effizienzsteigerungen hervor. Wichtig ist auch, dass die erfindungsgemäße Ausbildung des Verfahrens, des Hydrauliksystems und des Straßenfertigers optimale Möglichkeiten bietet, die unterschiedlichen Anforderungen der einzelnen hydraulischen Verbraucher während des Einbauprozesses und der Transportfahrt, wenn die Arbeitseinrichtungen nicht benötigt werden, in Bezug auf das Ausmaß des Ausspülprozesses im Betrieb zu berücksichtigen. So ist während der Transportfahrt beispielsweise keine oder zumindest nur eine sehr geringe Ausspülung der die Arbeitseinrichtungen antreibenden geschlossenen Hydraulikkreisläufe notwendig, wohingegen im Einbaubetrieb beispielsweise vom Ausmaß her die Ausspülung der geschlossenen Hydraulikkreisläufe der Fahrantriebsmotoren deutlich gegenüber den Arbeitseinrichtungen zurücktritt.

Nachfolgend wird die Erfindung anhand eines in den Zeichnungen dargestellten Ausführungsbeispieles weiter beschrieben. Es zeigen schematisch:
- Fig. 1:: eine Seitenansicht eines Straßenfertigers; und
- Fig. 2:: einen Hydraulikschaltplan eines Fahrantriebs des Straßenfertigers aus Fig. 1.

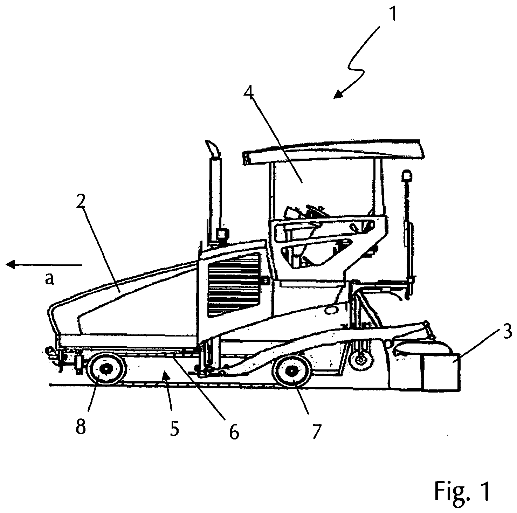

Fig. 1 zeigt ein selbstfahrenden Straßenfertiger 1. Die Vorwärtsfahrtrichtung ist mit dem Pfeil a bezeichnet. Der Straßenfertiger 1 weist im vorderen Bereich einen Gutbunker 2 zur Aufnahme von Einbaumaterial und im Heckbereich eine Einbau- bzw. Glättbohle 3. Ein Führerstand ist mit dem Bezugszeichen 4 versehen. Der Straßenfertiger 1 hat ein als Kettenfahrwerk 5 ausgebildetes Fahrwerk mit einem rechtsseitigen und einem linksseitigen Fahrschiff, wobei in der Seitenansicht von Fig. 1 lediglich das linksseitige Fahrschiff zu sehen ist. Jedes Fahrschiff weist eine Laufkette 6 sowie ein Antriebsrad 7 und ein Umlenkrad 8 auf. Alternativ ist auch ein Radfahrwerk möglich.

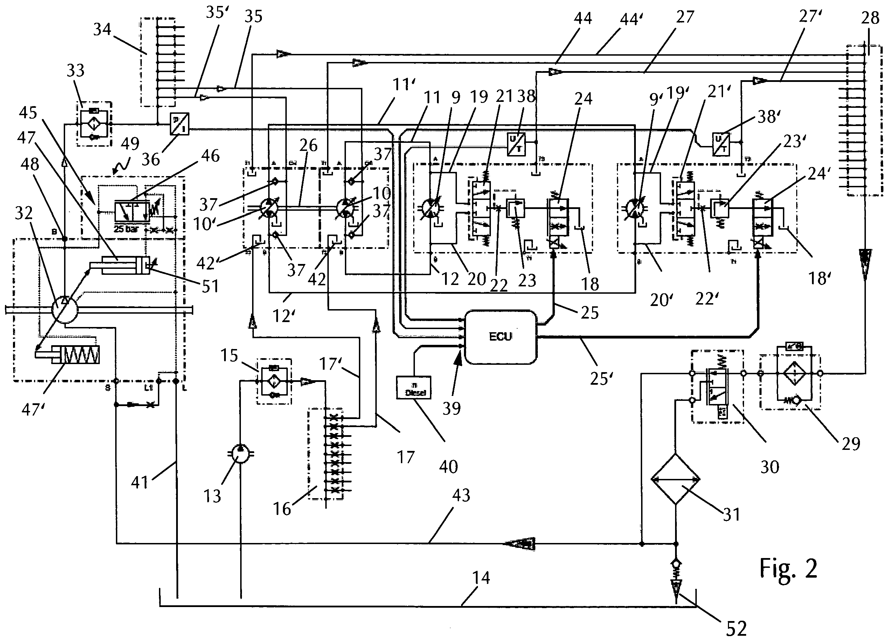

Der Straßenfertiger 1 ist mit einem Dieselmotor als Hauptantriebsaggregat (nicht dargestellt) versehen, mit welchem Pumpen eines hydraulischen Fahrantriebs (Fig. 2) sowie weitere Pumpen für hydraulische Stellglieder und Antriebe (nicht dargestellt) angetrieben werden. Fig. 2, in der Details zum Aufbau des Hydrauliksystems angegeben sind, zeigt somit nur einen Ausschnitt aus dem hydraulischen Gesamtsystem.

Gemäß Fig. 2 weist der Fahrantrieb einen ersten geschlossenen hydraulischen Kreislauf mit einem ersten Hydraulikmotor 9 und einer ersten Arbeitspumpe 10 zur Förderung des Hydrauliköls im ersten Kreislauf auf. Der erste Hydraulikmotor 9 dient zum Antrieb des Kettenfahrwerks (kann auch ein Rad sein) auf einer Seite des Straßenfertigers, beispielsweise des linksseitigen Antriebsrades 7. Der erste Kreislauf weist eine erste und zweite Arbeitsleitung 11, 12 zur Verbindung des ersten Hydraulikmotors 9 mit der ersten Arbeitspumpe 10 und zur Herstellung des geschlossenen Hydraulikkreislaufes auf.

Die erste Arbeitsleitung 11 ist über eine erste Entnahmeleitung 19 mit einem ersten Spülventil 21 verbunden, und die zweite Arbeitsleitung 12 ist über eine zweite Entnahmeleitung 20 mit dem ersten Spülventil 21 verbunden. Der Ausgang des ersten Spülventils 21 ist über eine erste Spülblende 22 mit einem ersten federbelasteten Druckhalteventil 23 verbunden.

Am Ausgang des ersten Druckhalteventils 23 liegt ein elektromagnetisch steuerbares erstes Proportionalventil 24, dessen Ausgang im Gehäuseinneren 18 des Hydraulikmotors 9 mündet. Der Steuereingang des ersten Proportionalventils 24 ist über eine erste Steuerleitung 25 mit einem von mehreren Ausgängen einer elektronischen Steuereinheit ECU verbunden, die eingangsseitig mit verschiedenen Betriebsparametern des Straßenfertigers 1 und insbesondere des Fahrantriebs beaufschlagt wird.

Die Steuereinheit ECU kann als eigenständiges Steuergerät ausgebildet sein. Alternativ kann die Funktion der Steuereinheit ECU auch von einer Steuereinheit übernommen werden, welche zusätzlich noch andere Funktionen des Straßenfertigers 1 steuert.

Die Steuereinheit verfügt über analoge und digitale Eingänge 39 für Sensoren, die hier beispielhaft als über eine Lastmeldeleitung an eine Hydraulikölleitung zwischen der Speisepumpe 32 und dem Sammelblock 34 angeschlossener Drucksensor 36 und als Temperatursensoren 38, 38' ausgebildet sind. Außerdem sind Schnittsellen zu einem Bussystem vorhanden, beispielsweise zu einem Motorsteuergerät, zur Maschinensteuerung des Straßenfertigers 1 und zu I/O-Schnittstellen (nicht dargestellt). Ein Temperatursensor 38 für die Temperatur des ausgespülten Hydrauliköls ist an der ersten Rückführleitung 27 angeordnet.

Gemäß Fig. 2 weist der Fahrantrieb einen zweiten geschlossenen hydraulischen Kreislauf auf, der im Wesentlichen identisch zum ersten Kreislauf ausgebildet ist. Er ist demnach mit einem zweiten Hydraulikmotor 9', einer zweiten Pumpe 10', dritten und vierten Arbeitsleitungen 11', 12', einem zweiten Gehäuseinneren 18', dritten und vierten Entnahmeleitungen 19', 20', einem zweiten Spülventil 21', einer zweiten Spülblende 22', einem zweiten federbelasteten Druckhalteventil 23', einem zweiten Temperatursensor 38' und einem zweiten Proportionalventil 24' versehen. Der zweite Hydraulikmotor dient zum Antrieb des anderen Fahrschiffs bzw. des anderen Antriebsrades des Fahrantriebs. Das Gesamthydrauliksystem des Straßenfertigers 1 umfasst ferner weitere nicht explizit dargestellte geschlossene Hydraulikkreisläufe auf, beispielsweise für ein Kratzband rechts und/oder für ein Kratzband links und/oder für eine Förderschnecke rechts und/oder für eine Förderschnecke links und/oder für einen Stampferantrieb und/oder für den Antrieb einer Vibrationsvorrichtung, die an das in Fig. 2 gezeigte Gesamtsystem angeschlossen sind.

Der Steuereingang des zweiten Proportionalventils 24' ist über eine zweite Steuerleitung 25' mit einem weiteren Ausgang der elektronischen Steuereinheit ECU verbunden. Über die Steuereinheit ECU können das erste und zweite Proportionalventil 24, 24' separat und unabhängig angesteuert werden.

Insgesamt weist der Straßenfertiger aus Fig. 1 noch weitere, im wesentlichen entsprechend aufgebaute geschlossene Hydraulikkreisläufe auf, über die weitere hydraulische Verbraucher, beispielsweise eine Stampfleiste, angetrieben werden. Diese weiteren geschlossenen Hydraulikkreisläufe sind lediglich aus Übersichtlichkeitsgründen in Fig. 2 nicht dargestellt.

Die erste und zweite Arbeitspumpe 10, 10' sind im vorliegenden Ausführungsbeispiel als Tandempumpe, die zusammen eine gemeinsame Baueinheit bilden, an einer gemeinsamen Antriebswelle 26 angeschlossen, die vom Dieselmotor über ein Pumpenverteilergetriebe (nicht dargestellt) angetrieben wird. Grundsätzlich kann hier auch auf alternative Anordnungen zurückgegriffen werden.

Über die beiden von der Steuereinheit ECU gesteuerten Proportionalventile 24, 24' wird eine von den Betriebsparametern, welche der Steuereinheit ECU zugeführt werden, abhängige Menge an Hydrauliköl aus den beiden geschlossenen Hydraulikkreisläufen entnommen. Zu diesen Betriebsparametern gehören die Öltemperatur und der Speisedruck des ersten und zweiten Kreislaufs und die Drehzahl des Dieselmotors, die aus einer Motorsteuerung 40 abgeleitet wird. Daraus wird in der Steuereinheit ECU für jeden Betriebspunkt ermittelt, welcher Bedarf an auszuspülendem Hydrauliköl im ersten und zweiten Kreislauf aktuell vorliegt.

Da die Steuereinheit ECU das erste und zweite Proportionalventil 24, 24' ansteuert, werden die Ausspülmengen des Hydrauliköls vom Öffnungsquerschnitt der Proportionalventile 24, 24' bestimmt. Die Ausspülmengen sind daher abhängig von den Betriebsparametern, welche der Steuereinheit ECU zugeführt und dort ausgewertet werden. Je geringer beispielweise die Temperatur oder die Drehzahl des Dieselmotors ist, umso weniger Bedarf an einer Ausspülung ist gegeben, und daher wird die Ausspülmenge entsprechend gering gehalten. Daraus ergibt sich entsprechend auch eine geringere Einspeisemenge pro Zeiteinheit.

Die für die im Ausspülprozess bedarfsgerechte Einspeisung notwendigen rückzuführenden Ölmengen werden für den ersten Kreislauf mittels eines Regelkreises 49 geregelt. Er weist eine druckgeregelte Speisepumpe 32 auf, welche Öl in die, je nach Förderrichtung, erste oder zweite Arbeitsleitungen 11, 12 einspeist und dadurch dem ersten Kreislauf bedarfsgerecht die zu den jeweiligen Betriebsbedingungen erforderliche Ölmenge zuführt. Die Zuführung erfolgt jeweils über ein Rückschlagventil.

Die Speisepumpe 32 ist mit einem Druckregler 45 versehen, welcher den maximalen Druck am Ausgang der Speisepumpe 32 innerhalb des Regelbereiches der Speisepumpe 32 begrenzt. Der Druckregler 45 besteht aus einem Druckventil 46 und einem ersten und zweiten hydraulischen Stellzylinder 47, 47', welche den Betriebsdruck der Speisepumpe 32 einstellen. Der Arbeitsausgang 48 der Speisepumpe 32 ist mit dem Steuereingang und einem der beiden Eingänge des Druckventils 46 sowie mit der federbelasteten Stellkammer des zweiten Stellzylinders 47' verbunden. Der Ausgang des Druckventils 46 ist mit der Druckkammer 51 des ersten Stellzylinders 47 verbunden. In einer ersten Regelstellung des Druckventils 46 verbindet es den Arbeitsausgang 48 der Speisepumpe 32 mit der Druckkammer 51 des ersten Stellzylinders 47 und in einer zweiten Regelstellung unterbricht es diese Verbindung.

Die Speisepumpe 32 fördert somit jeweils nur so viel Druckflüssigkeit, wie für die Ausspülung im Betrieb aktuell benötigt wird. Übersteigt der Betriebsdruck einen am Druckventil 46 eingestellten Drucksollwert, regelt die Speisepumpe 32 in Richtung eines kleineren Verdrängungsvolumens. Der Drucksollwert kann am Druckventil 46 stufenlos eingestellt werden. Die aktuell passende Bereitstellung der benötigten Ölmenge erfolgt durch die druckgeregelte Speisepumpe 32 aufgrund der Druckbegrenzung durch das Druckventil 46. Die Einspeisemenge ist damit direkt abhängig vom Öffnungsquerschnitt des ersten und zweiten Spülventils 21, 21'.

Bezüglich des zweiten Kreislaufs wird mittels der druckgeregelten Speisepumpe 32 in gleicher Weise eine bedarfsgerechte Menge an Hydrauliköl in die dritte und vierte Arbeitsleitung 11', 12' eingespeist, wobei hier ebenfalls eine bedarfsgerechte Öleinspeisung im Rahmen des Ausspülprozesses erfolgt.

Die Arbeitsleitung 48 der ersten Speisepumpe 32 ist über einen Ölfilter 33 mit einem ersten Sammelblock 34 (Verteiler) mit einer ersten Speiseleitung 35 und einer zweiten Speiseleitung 35' verbunden, welche mit der ersten und zweiten Arbeitsleitung 11, 12 bzw. der dritten und vierten Arbeitsleitung 11', 12' über jeweils ein Rückschlagventil 37 verbunden sind. Die Rückschlagventile 37 öffnen in Richtung auf die erste und zweite Arbeitsleitung 11, 12 sowie die dritte und vierte Arbeitsleitung 11', 12'. Eine Leitung für Leckflüssigkeit des Regelkreises der Speisepumpe 32 ist mit 41 bezeichnet. Ferner verdeutlicht Fig. 2, dass in Förderrichtung vor der Speisepumpe 32 eine Abzweigleitung vorhanden ist. Mit dieser Leitung wird Hydrauliköl zur Querspülung der Speisepumpe abgezweigt, das ebenfalls über die Leitung 41 direkt zum Tank 14 rückgeführt wird.

Der Ist-Wert des Speisedrucks und ein Mindestspeisedruck, hier 25 bar, in den beiden Speiseleitungen 35, 35' wird mittels des Drucksensors 36 ermittelt, der parallel zum ersten Sammelblock 34 mit dem Ausgang des Ölfilters 33 verbunden ist. Ausgangsseitig ist der Drucksensor 36 mit einem Eingang der Steuereinheit ECU verbunden, welche ihn zur Überwachung und Ermittlung der bedarfsgerechten Einspeisung auswertet.

Die erste und zweite Arbeitspumpe 10, 10' werden im vorliegenden Hydrauliksystem im Betrieb unabhängig vom vorstehend beschriebenen Einspeise- und Ausspülprozess quergespült. Dazu wird Hydrauliköl zu Kühl- und/oder Schmierzwecken durch die Arbeitspumpen 10, 10' gepumpt, wobei mit diesem Vorgang keine Antriebsfunktion der Motoren 9 und 9' erreicht wird. Zum Füllen des Gehäuseinneren 42, 42' der ersten und zweiten Arbeitspumpe 10, 10' mit Hydrauliköl ist eine als Konstantpumpe ausgebildete Kühl- und Schmierpumpe 13 (Spülpumpe), vorhanden, welche Hydrauliköl annähernd drucklos aus dem Tank 14 ansaugt, und welche ausgangsseitig über einen Filter 15 mit einem zweiten Sammelblock 16 (Verteiler) verbunden ist. Vom zweiten Sammelblock 16 führt pro geschlossenem Hydraulikkreislauf jeweils eine Kühl- und Schmierleitung 17, 17' in das Gehäuseinnere 42, 42', um die Gehäuse mit Öl zu füllen, zu schmieren und zu kühlen. Die Rückleitungen zum dritten Sammelblock 28 für Hydrauliköl, das den Gehäusen der ersten und zweiten Pumpe 10, 10' entnommen wird, sind mit 44, 44' bezeichnet. Das Gehäuse jeder Arbeitspumpe weist daher insgesamt mindestens fünf Anschlüsse auf: je einen für die zwei zum jeweiligen geschlossenen Hydraulikkreislauf gehörenden Arbeitsleitungen (11, 12 bzw. 11', 12'), einen für die Speiseleitung (35, 35'), die über ein Rückschlagventil 37 in die erste Arbeitsleitung (11, 11') bzw. zweite Arbeitsleitung (12, 12') mündet, und je einen für die Kühl- und Schmierleitung (17, 17') und die zugehörige Rückleitung (44, 44') aus dem Gehäuseinneren, die jeweils nicht direkt mit dem geschlossenen Hydraulikkreislauf verbunden sind sondern ein unabhängiges Kühl- und Schmiersystem bilden.

Die jeweils im Gehäuseinneren der Motoren 9, 9' ausgebildeten Sammeltanks 18, 18' des ersten bzw. zweiten Kreislaufs sind über erste bzw. zweite Rücklaufleitungen 27, 27' mit dem ausgangsseitigen dritten Sammelblock 28 (Sammler) verbunden, über welchen das aus den beiden Kreisläufen abgeführte Hydrauliköl zusammen mit dem aus dem Querspülprozess stammenden Hydrauliköl einem Rücklauffilter 29 mit anschließendem Öltemperaturregler 30 und Kühler 31 oder über einen Bypass unter Umgehung des Kühlers 31 dem Sauganschluss der Speisepumpe 32 über eine Bypass-Leitung 43 und damit wieder dem geschlossenen Hydraulikkreislauf zugeführt wird. Ein vorhandener Überschuss, der insbesondere durch die über die Kühl- und Schmierpumpe 13 letztendlich dem Sammelblock 28 zugeführte Menge Hydrauliköl erhalten wird, fließt über ein vorgespanntes Rückschlagventil 52 (Vorspanneinheit) in den Tank 14 und die Restmenge wird der Speisepumpe wieder am Sauganschluss zugeführt.

In jedem Fall, ob die Ölleitung über den Kühler oder den Bypass erfolgt, regelt der Öltemperaturregler 30 in Abhängigkeit von der Öltemperatur somit auf die Bypass-Leitung 43 um, die das Hydrauliköl unter Umgehung des Tanks 14 direkt in die erste Speisepumpe 32 leitet.

An den ersten und zweiten Sammelblock 34, 16 und den ausgangsseitigen dritten Sammelblock 28 können wahlweise noch weitere geschlossene hydraulische Kreisläufe der vorstehend beschriebenen Art angeschlossen werden, die nicht dargestellt sind.

Nachfolgend wird die Wirkungsweise des Hydraulikkreises von Fig. 2 beschrieben. Da der erste und der zweite Kreislauf identisch sind und sie demnach auf die gleiche Weise arbeiten, wird die Beschreibung auf den ersten Kreislauf mit dem ersten Hydraulikmotor 9 beschränkt.

Die erste Arbeitspumpe 10 fördert Hydrauliköl in einem geschlossenen Kreislauf über die erste Arbeitsleitung 11 an den ersten Hydraulikmotor 9 und treibt ihn an. Das Hydrauliköl fließt dann über die zweite Arbeitsleitung 12 zurück zur ersten Arbeitspumpe 10. Je nach Förderrichtung kann dieser Vorgang auch umgekehrt ablaufen. Dabei erwärmt sich das Hydrauliköl. Um beispielsweise eine kritische Erhöhung der Öltemperatur zu verhindern, wird aus dem ersten Kreislauf kontrolliert eine Ölmenge aus der Niederdruckseite entnommen, welche im Wesentlichen gleichzeitig durch gekühltes und gefiltertes Hydrauliköl ersetzt wird. Dieser Vorgang wird als Ausspülprozess bezeichnet.

Um den Wirkungsgrad des Kreislaufs nicht zu reduzieren, erfolgt die Entnahme des Hydrauliköls aus der jeweils Niederdruck führenden Arbeitsleitung über das erste Spülventil 21. Abhängig vom Druckverhältnis zwischen der ersten und zweiten Arbeitsleitung 11, 12 wird über das erste Spülventil 21 jeweils diejenige Arbeitsleitung 11, 12 mit dem Ausgang des Spülventils 21 verbunden, in welcher der niedrigere Druck herrscht. Um einen Mindestdruck in der jeweils den niedrigeren Druck führenden Arbeitsleitung 11, 12 einzustellen, dient das erste Druckhalteventil 23.

Die Entnahmemenge wird quantitativ vom ersten Proportionalventil 24 bestimmt, dessen Proportionalmagnet von der Steuereinheit ECU gesteuert wird, und welches nicht nur diskrete Schaltstellungen zulässt, sondern einen stetigen Übergang der Ventilöffnung. Die über das erste Proportionalventil 24 abgegebene Menge des Hydrauliköls wird dem ersten im Gehäuseinneren ausgebildeten Sammeltank 18 des ersten Kreislaufs zugeführt. Zur Ansteuerung des ersten Proportionalventils 24 arbeitet die Steuereinheit ECU zyklisch ein Programm ab, in welchem die erfassten Temperaturen am ersten Hydraulikmotor 9, die Dieseldrehzahl n und die Anforderungen für die Antriebsstränge ausgewertet werden. Der Zusammenhang zwischen diesen Größen wird dabei entweder zur Laufzeit berechnet oder es können Kennlinien oder Kennfelder in der Steuereinheit ECU hinterlegt sein.

Der Druckverlust im geschlossenen Hydraulikkreislauf auf der Niederdruckseite durch beispielsweise eine Entnahme von Hydrauliköl über das erste Proportionalventil 24 wird bedarfsgerecht durch das Einspeisen von Hydrauliköl mittels der druckgeregelten, als Verstellpumpe ausgebildeten, ersten Speisepumpe 32 ausgeglichen. Die Förderleistung der Speisepumpe 32 wird somit an die aktuell erforderliche Speiseölmenge in den geschlossenen Hydraulikkreisläufen angepasst. Verlustfördermengen der Speisepumpe 32 können dadurch auf in Minimum reduziert werden.

Gleichzeitig fördert die Spülpumpe 13 pro Zeiteinheit ein im Wesentlichen konstantes Ölvolumen. Das Hydrauliköl wird dabei den Pumpen 10 und 10' zugeführt und durch deren Gehäuse, unabhängig vom jeweiligen Betriebszustand, gepumpt. Auf diese Weise werden die beiden Pumpen geschmiert und gekühlt. Dieser als Querspülung bezeichnete Vorgang ist somit unabhängig zum vorliegend bedarfsgerecht geregelten Ausspülprozess.

## Patentansprüche

1. Verfahren zum Betrieb eines Hydrauliksystems eines selbstfahrenden Straßenfertigers, umfassend das Einspeisen von Hydrauliköl in einen geschlossenen Hydraulikkreislauf, wobei vom Hydraulikkreislauf mittels wenigstens einer Arbeitspumpe (10) wenigstens ein Hydraulikmotor (9) angetrieben wird, und wobei im Betrieb pro Zeiteinheit eine Menge Hydrauliköl zu Kühl- und/oder Filterzwecken aus dem geschlossenen Hydraulikkreislauf entnommen und an anderer Stelle eine Menge Hydrauliköl pro Zeiteinheit dem Hydraulikkreislauf wieder zugeführt wird,
**dadurch gekennzeichnet,**
**dass** das Einspeisen von Hydrauliköl in den geschlossenen Hydraulikkreislauf mithilfe einer als Verstellpumpe ausgebildeten Speisepumpe (32) erfolgt, deren Förderleistung variabel ist und anhand von mindestens einem Betriebsparameter bedarfsgerecht geregelt wird, und
**dass** ferner ein Spülkreislauf mit einer als Konstantpumpe ausgebildeten Spülpumpe (13) vorhanden ist, über den unabhängig zum geschlossenen Hydraulikkreislauf ein kontinuierliches und von dem wenigstens einen Betriebsparameter unabhängiges Spülen und/oder Kühlen der wenigstens einen Arbeitspumpe und/oder des wenigstens einen Hydraulikmotors zu Kühl- und/oder Schmierzwecken erfolgt.

2. Verfahren nach Anspruch 1,
**dadurch gekennzeichnet,**
**dass** die aus dem geschlossenen Kreislauf entnommene Menge an Hydrauliköl in Abhängigkeit von mindestens einem Betriebsparameter der Straßenfertiger geregelt wird, wobei der mindestens eine Betriebsparameter aktuell ermittelt und daraus anhand eines vorgegebenen Algorithmus eine Stellgröße zur Entnahme des Hydrauliköls berechnet werden, oder dass die Stellgröße aus dem Vergleich des aktuell ermittelten Betriebsparameters mit vorgegebenen Kenngrößen ermittelt wird.

3. Verfahren nach Anspruch 1 oder 2,
**dadurch gekennzeichnet,**
**dass** die Regelung der Förderleistung der Speisepumpe anhand des Drucks des Hydrauliköls in einer Lastmeldeleitung erfolgt und der Druck des Hydrauliköls dazu in diesem Bereich überwacht wird.

4. Verfahren nach einem der vorhergehenden Ansprüche,
**dadurch gekennzeichnet,**
**dass** die aus dem geschlossenen Hydraulikkreislauf entnommene Menge Hydrauliköl und das in dem Spülkreislauf stromabwärts der wenigstens einen Arbeitspumpe und/oder dem wenigstens einen Hydraulikmotor austretende Hydrauliköl in einem gemeinsamen Sammler vereint und einem gemeinsamen Tank, insbesondere über einen gemeinsamen Kühler, zugeführt wird
und/oder
**dass** stromabwärts der Konstantpumpe im Spülkreislauf ein Aufteilen des von der Konstantpumpe auf Arbeitspumpen und/oder Hydraulikmotoren wenigstens zweier geschlossener Hydraulikkreisläufe erfolgt, wobei hiervon unabhängig in beide geschlossenen Hydraulikkreisläufe bedarfsgerecht geregelt Hydrauliköl rückgeführt wird..

5. Hydrauliksystem eines Straßenfertigers, insbesondere zur Durchführung des Verfahrens nach einem der Ansprüche 1 bis 5, mit einem geschlossenen Hydraulikkreislauf mit mindestens einer Arbeitspumpe (10) und einem von dieser angetriebenen Hydraulikmotor (9), wobei dem geschlossenen Hydraulikkreislauf im Betrieb pro Zeiteinheit eine Menge Hydrauliköl zu Kühl- und/oder Filterzwecken entnommen und an anderer Stelle eine Menge Hydrauliköl pro Zeiteinheit wieder zugeführt wird, wobei die Zufuhr über eine aus einem Tank (14) gespeiste Speisepumpe (32) erfolgt,
**dadurch gekennzeichnet,**
**dass** die Speisepumpe (32) eine Verstellpumpe mit variabler Förderleistung ist, deren Förderleistung anhand von mindestens einem Betriebsparameter bedarfsgerecht geregelt ist, derart, dass sie Hydrauliköl bedarfsdeckend in den hydraulischen Kreislauf einspeist, und
**dass** das Hydrauliksystem eine als Konstantpumpe ausgebildete Spülpumpe (13) aufweist, die unabhängig von der Speisepumpe, insbesondere konstant, Hydrauliköl in einen Spülkreislauf fördert, wobei der Spülkreislauf derart ausgebildet ist, dass durch ihn die wenigstens eine Arbeitspumpe und/oder der wenigstens eine Hydraulikmotor unabhängig vom Betrieb der Speisepumpe gespült und/oder gekühlt wird.

6. Hydrauliksystem nach Anspruch 5, **dadurch gekennzeichnet,**
**dass** der geschlossene Hydraulikkreislauf ferner eine Spülblende (22, 22') und ein Druckhalteventil (23, 23') umfasst, wobei der Spülblende (22, 22') ein Proportionalventil (24, 24') mit einem variablen Ventilöffnungsquerschnitt nachgeschaltet ist, welches in Abhängigkeit von dem Betriebsparameter angesteuert ist, so dass der Ventilöffnungsquerschnitt und damit die aus dem Kreislauf entnommene und in den Hydrauliköltank zurückgeführte Menge an Hydrauliköl vom Betriebsparameter abhängt, wobei das Proportionalventil (24, 24') insbesondere einen Steuereingang (39) auf der Basis eines elektrisch betätigbaren Magneten, eines Wachsdehnelements oder eines Bimetalls aufweist.

7. Hydrauliksystem nach Anspruch 6,
**dadurch gekennzeichnet,**
**dass** das Proportionalventil (24, 24') von einer elektronischen Steuereinheit (ECU) angesteuert ist, und dass der mindestens eine Betriebsparameter über einen Temperatursensor (38, 38') und/oder einen Drucksensor (36) ermittelt wird.

8. Hydrauliksystem nach einem der Ansprüche 6 bis 7, **dadurch gekennzeichnet,**
**dass** das Proportionalventil (24, 24') von einer elektronischen Steuereinheit (ECU) angesteuert ist, und dass der mindestens eine Betriebsparameter von einer Motorsteuerung (40) oder einer Maschinesteuerung abgeleitet wird.

9. Hydrauliksystem nach einem der Ansprüche 5 bis 8,
**dadurch gekennzeichnet,**
**dass** es wenigstens eines oder mehrere der folgenden Merkmale aufweist:
- **dass** ein Datenspeicher vorhanden ist, in welchem Kenngrößen des mindestens einen Betriebsparameters zum Vergleich mit dem aktuellen Betriebsparameter zur Ermittlung einer Stellgröße für die Entnahme des Hydrauliköls gespeichert sind;
- **dass** mehrere geschlossene hydraulische Kreisläufe vorhanden sind, und dass jeder Kreislauf separat geregelt ist;
- **dass** die bedarfsdeckende Einspeisung von Hydrauliköl in die mehreren geschlossenen Hydraulikkreisläufe gemeinsam über die als Verstellpumpe ausgebildete Speisepumpe erfolgt, wobei stromabwärts der Speisepumpe ein Verteiler vorgesehen ist, über den die Zuleitung des Hydrauliköls zu den mehreren geschlossenen Hydraulikkreisläufen erfolgt.

10. Hydrauliksystem nach einem der Ansprüche 5 bis 9,
**dadurch gekennzeichnet,**
**dass** ein Sammler (28) vorhanden ist, über den die aus dem wenigstens einen geschlossenen Hydraulikkreislauf entnommene Menge Hydrauliköl und die mittels der Spülpumpe durch die wenigstens eine Arbeitspumpe und/oder den wenigstens eine Hydraulikmotor geförderte Menge Hydrauliköl vereint werden, wobei insbesondere stromabwärts des Sammlers (28) eine Kühlbypassleitung vorgesehen ist, über die Hydrauliköl in Strömungsrichtung vor einem Sammeltank und/oder vor der Speisepumpe (32) einem Kühler (31) zuführbar ist.

11. Hydrauliksystem nach einem der Ansprüche 5 bis 10,
**dadurch gekennzeichnet,**
**dass** die Speisepumpe (32) einen Druckregler (45) umfasst, der zur Einstellung des Betriebsdrucks der Speisepumpe (32) an ihrem Ausgang innerhalb eines Regelbereiches ausgebildet ist.

12. Straßenfertiger mit einem Hydrauliksystem nach einem der Ansprüche 5 bis 11.

13. Straßenfertiger nach Anspruch 12,
**dadurch gekennzeichnet,**
**dass** wenigstens zwei geschlossene Hydraulikkreisläufe mit jeweils wenigstens einer Arbeitspumpe und jeweils wenigstens einem Hydraulikmotor vorhanden sind, wobei stromabwärts der Spülpumpe (13) ein Verteiler vorhanden ist, der das von der Spülpumpe geförderte Hydrauliköl parallel auf die jeweils wenigstens eine Arbeitspumpe und/oder den wenigstens eine Hydraulikmotor der beiden Hydraulikkreisläufe aufteilt.

14. Straßenfertiger nach Anspruch 13,
**dadurch gekennzeichnet,**
**dass** die mehreren Arbeitspumpen (10, 10') wenigstens teilweise als Baueinheit zusammengefasst sind und gleichzeitig separate Ein- und Ausgänge für das von der Spülpumpe (13) zu Spül- und/oder Kühlzwecken geförderte Hydrauliköl aufweisen.

15. Straßenfertiger nach Anspruch 14,
**dadurch gekennzeichnet,**
**dass** er mit einer Stampfbohle, einem rechten Fahrwerk und einem linken Fahrwerk ausgebildet ist, und dass der Hydraulikschaltkreis je einen geschlossenen hydraulischen Kreislauf zum Antrieb der Stampfbohle, des rechten Fahrwerks und des linken Fahrwerks umfasst und insbesondere weitere geschlossene Hydraulikkreisläufe für Antriebe von einem rechten und/oder linken Kratzband, von einer rechten und/oder linken Förderschnecke und/oder von einer Vibrationseinrichtung aufweist.

## Claims

1. Method for operating a hydraulic system of a self-propelled road paver, comprising feeding hydraulic oil into a closed hydraulic circuit, wherein at least one hydraulic motor (9) is driven by the hydraulic circuit by means of at least one operating pump (10), and wherein a quantity of hydraulic oil is removed from the closed hydraulic circuit during operation per unit of time for cooling and/or filtering purposes and a quantity of hydraulic oil is fed back to the hydraulic circuit at another location per unit of time,
**characterized in that**
the feeding of hydraulic oil into the closed hydraulic circuit occurs by means of a feed pump (32) configured as a variable displacement pump, the delivery rate of which is variable and regulated by at least one operating parameter in a need-based manner, and
that, moreover, a scavenger circuit is present with a scavenger pump (13) configured as a fixed displacement pump, via which, independently of the closed hydraulic circuit, a continuous flushing and/or cooling of the at least one operating pump and/or the at least one hydraulic motor occurs for cooling and/or lubricating purposes.

2. Method according to claim 1,
**characterized in that**
the quantity of hydraulic oil taken from the closed circuit is regulated as a function of at least one operating parameter of the road paver, wherein the at least one operating parameter is determined currently and an adjustment value is calculated on the basis of said parameter by means of a predetermined algorithm for extracting the hydraulic oil, or **in that** the adjustment value is ascertained from a comparison of the currently determined operating parameter with predetermined standard parameter values.

3. Method according to claim 1 or 2,
**characterized in that**
the regulation of the delivery rate of the feed pump occurs on the basis of the pressure of the hydraulic oil in a load signal line and the pressure of the hydraulic oil is monitored in this region for this purpose.

4. Method according to any one of the preceding claims,
**characterized in that**
the quantity of hydraulic oil extracted from the closed hydraulic circuit and the hydraulic oil escaping in the scavenging circuit downstream of the at least one operating pump and/or the at least one hydraulic motor are joined in a common collector and fed to a common tank, in particular via a common cooler,
and/or
**in that** a division of the hydraulic oil conveyed by the fixed displacement pump occurs downstream of the fixed displacement pump in the scavenger circuit among operating pumps and/or hydraulic motors of at least two closed hydraulic circuits, wherein, independently thereof, hydraulic oil is returned in a regulated and need-based manner to both closed hydraulic circuits.

5. Hydraulic system of a road paver, in particular for carrying out the method according to any one of claims 1 to 5, comprising a closed hydraulic circuit with at least one operating pump (10) and a hydraulic motor (9) which is driven by said pump, wherein a quantity of hydraulic oil is extracted from the closed hydraulic circuit in operation per unit of time for cooling and/or filtering purposes, and a quantity of hydraulic oil is fed back at another location per unit of time, this feeding occurring via a feed pump (32) supplied from a tank (14),
**characterized in that**
the feed pump (32) is a variable displacement pump with a variable delivery rate, the delivery rate of which is regulated in a need-based manner by means of at least one operating parameter, such that it feeds hydraulic oil to the hydraulic circuit to cover the needs of the latter, and **in that** the hydraulic system comprises a scavenger pump (13) configured as a fixed displacement pump, which, independently of the feed pump and in particular in a constant manner, conveys hydraulic oil to a scavenger circuit, the scavenger circuit being configured in such a way that the at least one operating pump and/or the at least one hydraulic motor is flushed and/or cooled by said scavenging circuit independently of the operation of the feed pump.

6. Hydraulic system according to claim 5,
**characterized in that**
the closed hydraulic circuit further comprises a scavenger aperture (22, 22') and a pressure-maintaining valve (23, 23'), wherein a proportional valve (24, 24') with a variable valve-opening cross-section is provided downstream of the scavenger aperture (22, 22'), said cross-section being controlled as a function of the operating parameter, so that the valve-opening cross-section and thus the quantity of hydraulic oil taken from the circuit and fed back to the hydraulic oil tank depends on the operating parameter, wherein the proportional valve (24, 24') comprises a control input (39) on the basis of an electrically actuatable magnet, a wax expansion element or a bimetallic element.

7. The hydraulic system according to claim 6,
**characterized in that**
the proportional valve (24, 24') is controlled by an electronic control unit (ECU), and that the at least one operating parameter is determined by a temperature sensor (38, 38') and/or a pressure sensor (36).

8. The hydraulic system according to claim 6 or 7,
**characterized in that**
the proportional valve (24, 24') is controlled by an electronic control unit (ECU), and **in that** the at least one operating parameter is derived from a motor control system (40) or a machine control system.

9. The hydraulic system according to any one of claims 5 to 8,
**characterized in that**
it comprises at least one or several of the following features:
- a data memory is present in which standard parameter values of the at least one operating parameter are stored for comparison with the current operating parameter in order to determine an adjustment value for the extraction of the hydraulic oil;
- several closed hydraulic circuits are present and each circuit is regulated separately;
- the need-based supply of hydraulic oil to the several closed hydraulic circuits occurs jointly via the feed pump configured as a variable displacement pump, wherein a distributor is provided downstream of the feed pump, via which the hydraulic oil is fed to the several closed hydraulic circuits.

10. The hydraulic system according to any one of claims 5 to 9,
**characterized in that**
a collector (28) is present, via which the quantity of hydraulic oil extracted from the at least one closed hydraulic circuit and the quantity of hydraulic oil conveyed by means of the scavenger pump through the at least one operating pump and/or the at least one hydraulic motor are combined, wherein a cooling bypass line is provided in particular downstream of the collector (28), via which hydraulic oil can be fed to a cooler (31) in front of a collecting tank and/or or the feed pump (32) in the direction of flow.

11. The hydraulic system according to any one of claims 5 to 10,
**characterized in that**
the feed pump (32) comprises a pressure regulator (45) configured for setting the operating pressure of the feed pump (32) at its outlet within a regulating range.

12. A road paver with a hydraulic system according to any one of claims 5 to 11.

13. The road paver according to claim 12,
**characterized in that**
at least two closed hydraulic circuits respectively with at least one operating pump and at least one hydraulic motor are present, wherein a distributor is present downstream of the scavenger pump (13), said distributor dividing the hydraulic oil conveyed by the scavenger pump in parallel to the respective at least one operating pump and/or the at least one hydraulic motor of the two hydraulic circuits.

14. The road paver according to claim 13,
**characterized in that**
the several operating pumps (10, 10') are combined as a modular unit and simultaneously comprise separate inlets and outlets for the hydraulic oil conveyed by the scavenger pump (13) for scavenging and/or cooling purposes.

15. The road paver according to claim 14,
**characterized in that**
it is provided with a tamping screed, a right travel unit and a left travel unit, and that the hydraulic circuit respectively comprises a closed hydraulic circuit for driving the tamping screed, the right travel unit and the left travel unit, and in particular further closed hydraulic circuits for the drives of a right and/or left scraper conveyor, a right and/or left screw conveyor and/or a vibration device.

## Revendications

1. Procédé pour le fonctionnement d'un système hydraulique d'un finisseur mobile, comprenant l'introduction d'huile hydraulique dans un circuit hydraulique fermé, dans lequel au moins un moteur (9) hydraulique est actionné par le circuit hydraulique au moyen d'une pompe (10) de travail, et dans lequel pendant le fonctionnement une quantité d'huile hydraulique est retirée du circuit hydraulique fermé aux fins de refroidissement ou de filtrage par unité de temps et une quantité d'huile hydraulique est réintroduite dans le circuit hydraulique à un autre endroit par unité de temps,
***caractérisé en ce que*** l'introduction d'huile hydraulique dans le circuit hydraulique fermé se fait à l'aide d'une pompe (32) d'alimentation configurée en tant que pompe variable, dont la capacité de pompage est variable, et est réglée par au moins un paramètre opérationnel de façon adaptée aux besoins, et **en ce que**, de plus, un circuit de rinçage est présent avec une pompe (13) de rinçage configurée en tant que pompe à cylindre constante, au moyen duquel indépendamment du circuit hydraulique fermé un rinçage et/ou refroidissement de ladite au moins une pompe de travail et/ou dudit au moins un moteur hydraulique a/ont lieu aux fins de refroidissement ou de lubrification.

2. Procédé selon la revendication 1,
***caractérisé en ce que***
la quantité d'huile hydraulique prise dans le circuit fermé est réglée en fonction d'au moins un paramètre opérationnel du finisseur, ledit au moins un paramètre opérationnel étant déterminé actuellement et une valeur de réglage pour la prise de l'huile hydraulique étant calculée sur cette base au moyen d'un algorithme prédéterminé, ou **en ce que** la valeur de réglage est déterminée par une comparaison des paramètres opérationnels actuellement déterminés avec des valeurs de références prédéterminées.

3. Procédé selon la revendication 1 ou 2,
***caractérisé en ce que***
la réglage de la capacité de pompage de la pompe d'alimentation se fait au moyen de la pression de l'huile hydraulique dans une conduite de signalement de charge et la pression de l'huile hydraulique est contrôlée dans cette région à cette fin.

4. Procédé selon l'une quelconque des revendications précédentes,
***caractérisé en ce que***
la quantité d'huile hydraulique prise dans le circuit hydraulique et l'huile hydraulique de fuite dans le circuit de rinçage en aval de ladite au moins une pompe de travail et/ou dudit au moins un moteur hydraulique sont unies dans un collecteur commun ou amenées à un réservoir commun, en particulier via un refroidisseur commun
et/ou
**en ce que**, en aval de la pompe à cylindre constante dans le circuit de rinçage, une division de l'huile hydraulique entre des pompes de travail et/ou des moteurs hydrauliques desdits au moins deux circuits hydrauliques fermés a lieu, tandis que, indépendamment de ceci, de l'huile hydraulique est ramenée aux deux circuits hydrauliques fermés de façon réglée et adaptée aux besoins.

5. Système hydraulique d'un finisseur, en particulier pour la mise en oeuvre du procédé selon l'une quelconque des revendications 1 à 5, avec un circuit hydraulique fermé avec au moins une pompe (10) de travail et un moteur hydraulique (9) actionné par celle-ci, dans lequel une quantité d'huile hydraulique est prise dans le circuit hydraulique fermé pendant le fonctionnement par unité de temps aux fins de refroidissement et/ou de filtrage et une quantité d'huile hydraulique est ramenée à un entre endroit par unité de temps, l'huile hydraulique étant ramenée au moyen d'une pompe (32) d'alimentation qui est alimentée par un réservoir (14),
***caractérisé en ce que***
la pompe (32) d'alimentation est une pompe variable avec une capacité de pompage variable, dont la capacité de pompage est réglée sur la base d'au moins un paramètre opérationnel de façon adaptée aux besoins, de telle façon qu'elle alimente le circuit hydraulique en huile hydraulique de façon de subvenir aux besoins, et **en ce que** le système hydraulique comprend une pompe (13) de rinçage configurée en tant que pompe à cylindre constante, qui débite l'huile hydraulique dans le circuit de rinçage indépendamment de la pompe d'alimentation, en particulier de façon constante, le circuit de rinçage étant configuré de façon à rincer et/ou refroidir ladite au moins une pompe de travail et/ou ledit au moins un moteur hydraulique indépendamment du fonctionnement de la pompe d'alimentation.

6. Système hydraulique selon la revendication 5,
***caractérisé en ce que***
le circuit hydraulique fermé comprend en outre une ouverture (22, 22') de rinçage et un clapet (23, 23') de maintien de la pression, dans lequel, en aval de l'ouverture (22, 22') de rinçage, une soupape (24, 24') proportionnelle est agencée avec une section d'ouverture transversale qui est contrôlée en fonction du paramètre opérationnel de façon à ce que la section transversale de l'ouverture de la soupape et ainsi la quantité d'huile hydraulique prise dans le circuit et ramenée au réservoir d'huile hydraulique dépende du paramètre opérationnel, la soupape (24, 24') proportionnelle comprenant en particulier une entrée de commande (39) sur la base d'un aimant électriquement actionnable, d'un élément de cire étendable ou d'une bande bimétallique.

7. Système hydraulique selon la revendication 6,
***caractérisé en ce que***
la soupape (24, 24') proportionnelle est contrôlée par une unité de commande électrique (UCE) et **en ce que** ledit au moins un paramètre opérationnel est déterminé au moyen d'un capteur (38, 38') de température et/ou d'un capteur (36) de pression.

8. Système hydraulique selon la revendication 6 ou 7,
***caractérisé en ce que***
la soupape (24, 24') proportionnelle est contrôlée par une unité de commande électrique (UCE) et **en ce que** ledit au moins un paramètre opérationnel est dérivé d'une commande de moteur (40) ou d'une commande de machine.

9. Système hydraulique selon l'une quelconque des revendications 5 à 8,
***caractérisé en ce qu*'**
il comprend l'une ou plusieurs des caractéristiques suivantes:
- une mémoire de données est présente, dans laquelle des valeurs de référence dudit au moins un paramètre opérationnel sont sauvegardées pour la comparaison avec le paramètre opérationnel actuel pour la détermination de la valeur de réglage pour la prise de l'huile hydraulique;
- plusieurs circuits hydrauliques fermés sont présents et chaque circuit est réglé séparément;
- l'alimentation adéquate des plusieurs circuits hydrauliques fermés en huile hydraulique se fait en commun au moyen de la pompe d'alimentation configurée en tant que pompe variable, pendant qu'un distributeur est présent en aval de la pompe d'alimentation, au moyen duquel l'alimentation des plusieurs circuits hydrauliques fermés en huile hydraulique a lieu.

10. Système hydraulique selon l'une quelconque des revendications 5 à 9,
***caractérisé en ce que***
un collecteur (28) est présent au moyen duquel l'huile hydraulique prise dans ledit au moins un circuit hydraulique fermé et/ou la quantité d'huile hydraulique débitée au moyen de la pompe de rinçage à travers ladite au moins une pompe de travail et/ou ledit au moins un moteur hydraulique sont unies, pendant que, en particulier en aval du collecteur (28), une conduite de dérivation de refroidissement est présente, au moyen de laquelle l'huile hydraulique peut être amenée à un refroidisseur (31) avant le réservoir de collection et/ou avant la pompe (32) d'alimentation dans la direction du flux.

11. Système hydraulique selon l'une quelconque des revendications 5 à 10,
***caractérisé en ce que***
la pompe (32) d'alimentation comprend un régleur de pression (45) configuré pour le réglage de la pression opérationnelle de la pompe (32) d'alimentation à sa sortie à l'intérieur d'une plage de réglage.

12. Finisseur avec un system hydraulique selon l'une quelconque des revendications 5 à 11.

13. Finisseur selon la revendication 12,
***caractérisé en ce que***
au moins deux circuits hydrauliques fermés respectivement avec au moins une pompe de travail et au moins un moteur hydraulique sont présents, un distributeur étant présent en aval de la pompe (13) de rinçage, le distributeur divisant l'huile hydraulique débitée par la pompe de rinçage en parallèle respectivement entre ladite au moins une pompe de travail et/ou ledit au moins un moteur hydraulique des deux circuits hydrauliques.

14. Finisseur selon la revendication 13,
***caractérisé en ce que***
les plusieurs pompes de travail (10, 10') sont au moins partiellement regroupées en tant qu'ensemble de construction et simultanément comprennent des entrées et des sorties séparées pour l'huile hydraulique débitée par la pompe (13) de rinçage aux fins de rinçage et/ou de refroidissement.

15. Finisseur selon la revendication 14,
***caractérisé en ce qu'***
il est configuré avec une poutre dameuse, un mécanisme de déplacement droit et un mécanisme de déplacement gauche, et **en ce que** le circuit hydraulique comprend respectivement un circuit hydraulique fermé pour l'entraînement de la poutre dameuse, du mécanisme de déplacement droit et du mécanisme de déplacement gauche, et en particulier d'autres circuits hydrauliques fermés pour l'entraînement d'un convoyeur à raclettes droit et/ou gauche, d'une hélice transporteuse droite et/ou gauche et/ou d'un dispositif de vibration.
